# EUROPÄISCHE PATENTSCHRIFT

(11) **EP 3 378 791 B1**
(45) Veröffentlichungstag und Bekanntmachung des Hinweises auf die Patenterteilung: **22.01.2020**
(21) Anmeldenummer: 18000175.2
(22) Anmeldetag: 21.02.2018
(51) Int. Cl.: B65B 19/14, B65D 75/46, B65D 85/10, B65B 19/20, B65B 57/04, B65B 41/18, B29C 65/00, B65B 49/08, B65B 51/06, B65B 61/00, B65B 61/02, B65B 19/22, B65B 7/08, B65B 9/06, B65B 51/30, B65B 9/067, B65B 11/12, B65D 75/58, B29L 31/00, B29C 65/18

(54) **VERFAHREN UND VORRICHTUNG ZUM HERSTELLEN VON ZIGARETTENPACKUNGEN**
METHOD AND DEVICE FOR PRODUCING CIGARETTE PACKAGES
PROCÉDÉ ET DISPOSITIF DE FABRICATION DE PAQUETS DE CIGARETTES

(30) Priorität: 24.03.2017 DE 102017002934
(43) Veröffentlichungstag der Anmeldung: 26.09.2018
(73) Patentinhaber: Focke & Co. (GmbH & Co. KG), 27283 Verden (DE)
(72) Erfinder: Roesler, Burkard, 27337 Blender (DE)
(74) Vertreter: Aulich, Martin

(56) Entgegenhaltungen:
- DE-A1- 3 332 950
- DE-A1-102013 009 470
- DE-A1-102013 009 471
- DE-B- 1 217 848
- DE-C- 802 564
- GB-A- 2 529 431

## Beschreibung

Die Erfindung betrifft ein Verfahren zum Herstellen von Packungen für Zigaretten und andere Raucherartikel mit den Merkmalen des Oberbegriffs des Anspruchs 1. Weiterhin geht es um Vorrichtungen zur Durchführung des Verfahrens.

Im Vordergrund der Innovation steht die Herstellung von Packungen für eine Gruppe von formierten Zigaretten - Zigarettengruppe - mit einer Umhüllung aus Folie, insbesondere aus aroma- und feuchtigkeitsdichter, thermisch siegelbarer Dichtfolie. Bevorzugt ist die Zigarettengruppe mit einem Innenkragen - nachfolgend Tray - zur Abstützung und Sicherung der Zigaretten gegen mechanische und/oder thermische Belastung versehen. Der Innenkragen (Tray) weist mindestens eine Kragen- bzw. Tray-Vorderwand, eine Tray-Bodenwand und vorzugsweise Tray-Seitenwände auf.

In einem ersten Arbeitsschritt werden die Zigarettengruppe und jeweils ein Innenkragen bzw. Tray zur Bildung einer Einheit zusammengefügt. Diese Einheit wird sodann bei quergerichteten Zigaretten von einer fortlaufend zugeführten Folienbahn unter Bildung eines Folienschlauchs umhüllt. Zwischen aufeinanderfolgenden Einheiten wird ein exakter Abstand definiert. Im Bereich dieses freien Schlauchabschnitts - Faltabschnitts - werden die Seitennähte, insbesondere Flossennähte, hergestellt. Zugleich werden im Bereich der (doppelten) Seitennähte quergerichtete Trennschnitte ausgeführt, jeweils unter Bildung einer kompletten Folien- bzw. Innenpackung (DE 10 2013 009 471 A1).

Bei der Fertigung von Packungen aus Folie mit seitlichen Flossennähten besteht ein wichtiges Detailproblem in der Ausbildung an den Enden der Seitennähte, also benachbart zu einer (Innen-)Stirnwand bzw. zu einer (Innen-)Bodenwand. Bei Flossennähten entstehen in diesem Bereich dreieckförmige Zwickel, die beispielsweise außen an die Seitenflächen gelegt werden (WO 98/49072).

Vorrangige Aufgabe der Erfindung ist die Ausbildung von (thermischen) Verbindungs- bzw. Siegelnähten, insbesondere von Seitennähten, hinsichtlich der Dichtigkeit an den Enden der Nähte, und zwar unter Vermeidung von Fehlstrukturen der Folie, insbesondere Falten- und Wellenbildungen oder von viellagigen Bereichen.

Zur Lösung dieser Aufgabe ist das erfindungsgemäße Verfahren mit den Merkmalen des Anspruchs 1 anzuwenden.

Die Endbereiche der Siegelnähte, insbesondere Flossennähte, sind demnach durch Hilfsschnitte im Bereich der Folie vor der Faltung so ausgebildet, dass mit Hilfe von Faltorganen die an den Enden der Siegelnähte entstehenden Faltlappen in die Siegelung der Verbindungsnähte integriert werden, derart, dass eine dichte Nahtstruktur entsteht. In der einfachen Ausführung ist ein Hilfsschnitt im Bereich einer Schlauch-Seitenwand der Folie angebracht, etwa mittig zwischen aufeinanderfolgenden Zigarettengruppen bzw. Einheiten. Der Hilfsschnitt trennt die der einen Packung und der anderen Packung zugeordneten Faltlappen.

Zusätzlich zum Hilfsschnitt können erfindungsgemäß die Faltlinien in den Endbereichen der Flossennähte durch Vorformung, Vorprägung oder Teilstanzung im Bereich der Folienbahn für den Faltprozess vorbereitet werden, sodass sich die erwünschten, regelmäßig verlaufenden Faltlinien durch die Wirkung der seitlich in den Folienschlauch eingeführten Faltorgane einstellen.

Auf der Folienbahn werden weiterhin positionsgenau Organe einer Öffnungshilfe, insbesondere Verschlussetiketten bzw. Betätigungsetiketten übertragen. Des Weiteren werden Stanz- und Perforationslinien an der Folie angebracht, zum einen zur Definition einer Lasche für eine Entnahmeöffnung der Folienpackung, zum anderen aber auch Teilschnitte bzw. Perforationen zur Markierung der Faltlinien. Diese Vorbereitung der Folienbahn wird vorzugsweise an der Innenseite der Packung entsprechenden Seite der Folienbahn ausgeführt.

Ein weiteres Thema der Erfindung ist die Anbringung von Entlüftungsöffnungen an der Folie für die Entlüftung der (dichten) Packung beim Anbringen von Seitennähten, insbesondere Flossennähten. Vorzugsweise werden nach der Technologie der DE 10 2013 009 470 A1 zwei Teilnähte nebeneinanderliegend angebracht, wobei die zweite Teilnaht dicht am Packungsinhalt anliegt und ein Seitenstreifen abgetrennt werden kann. Die erfindungsgemäße Besonderheit besteht darin, dass die Entlüftungsöffnungen, insbesondere in der Ausführung als U-Stanzung, im Bereich der Folienbahn so positioniert sind, dass die durch die Stanzung gebildeten Zungen quergerichtet sind (bezogen auf die Längserstreckung der Folienbahn). Weiterhin ist die Relativstellung so gewählt, dass beim Abtrennen eines Randstreifens nach Anbringen der zweiten Siegelnaht die U-Stanzungen vorzugsweise etwa mittig durchtrennt werden.

Der Vorrichtung zum Herstellen der (Folien-)Packungen ist ein Folienaggregat zugeordnet mit Führungs- und Leitorganen zur Bildung des Folienschlauchs aus einer fortlaufend zugeführten und vorbereiteten Folienbahn. Vorzugsweise wird dafür die der DE 10 2013 009 471 A1 entnehmbare Technologie eingesetzt. Ein an den Bereich der Schlauchbildung anschließende Station dient zum Falten der insbesondere boden- und stirnseitigen Endbereiche der Seitennähte, zum Siegeln derselben und zum Durchführen des Trennschnitts für die Herstellung einer (Dicht-)Packung.

Ausführungsbeispiele für das Verfahren sowie der Vorrichtung zur Durchführung des Verfahrens werden nachfolgend anhand der Patentzeichnungen erläutert. Es zeigt:
- Fig. 1: eine Folienpackung als Innenpackung in perspektivischer Darstellung, während einer Endphase der Fertigung,
- Fig. 2: die fertiggestellte Folien- bzw. Innenpackung,
- Fig. 3: eine komplette Zigarettenpackung mit Folien-Innenpackung sowie Außenpackung in der Ausführung als Klappschachtel, bei geöffnetem Deckel,
- Fig. 4: eine Einzelheit IV der Fig. 1 in vergrößertem Maßstab,
- Fig. 5: eine Darstellung analog Fig. 4 für die Einzelheit V der Fig. 1,
- Fig. 6: einen Abschnitt einer fortlaufenden Folienbahn in Draufsicht,
- Fig. 7: eine schematische Seitenansicht eines Teils der Gesamtvorrichtung, nämlich Vorbereitung einer Folienbahn,

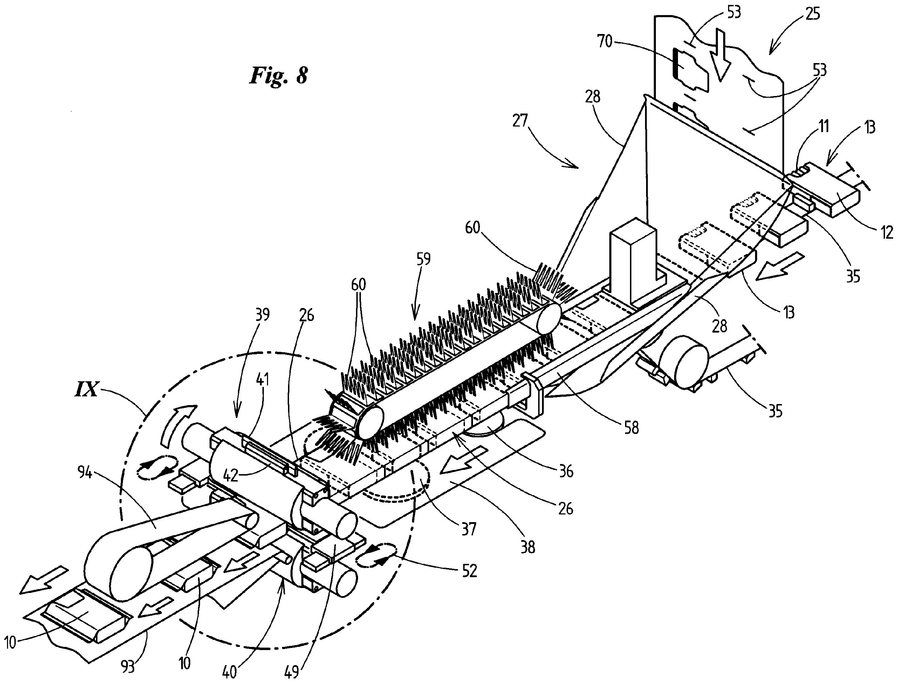

- Fig. 8: einen Bereich der Vorrichtung zum Herstellung der Folien- bzw. Innenpackungen in schematischer Darstellung,
- Fig. 9: einen Ausschnitt IX der Vorrichtung gemäß Fig. 8 in vergrößertem Maßstab, teilweise im (Vertikal-)Schnitt,
- Fig. 10: einen Abschnitt einer Folienbahn mit einer anderen Version hinsichtlich der Vorbereitung derselben,
- Fig. 11: eine Folienpackung während der Herstellungsphase, analog zu Fig. 1,
- Fig. 12: die Packung gemäß Fig. 11 nach Komplettierung.

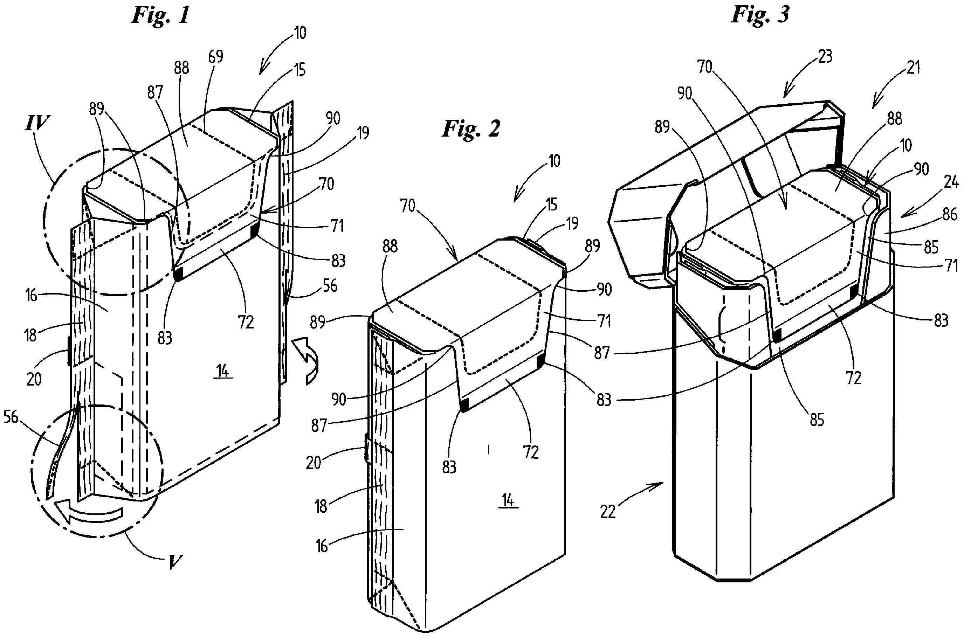

Es geht um die Gestaltung und Fertigung von (Zigaretten-)Folienpackungen mit im Wesentlichen quaderförmiger Ausbildung. Eine fertige Folienpackung in der Ausführung als Innenpackung 10 einer komplexen Gesamtpackung (Fig. 3) ist so ausgebildet, dass eine formierte Gruppe von Zigaretten, also eine Zigarettengruppe 11, von einem Innenkragen bzw. Tray 12 (teilweise) umgeben ist. Das Tray 12 - aus dünnem Karton - kann in verschiedener Weise ausgebildet sein, vorzugsweise mit Vorderwand, Seitenwänden, Bodenwand und mit einer Teil-Rückwand. Diese (bekannte) Ausführung des Trays umfasst die Zigarettengruppe 11 im unteren Bereich der Zigaretten vollständig. Zigarettengruppe 11 und Innenkragen 12 werden nachfolgend als Einheit 13 bezeichnet.

Die Zigarettengruppe 11 oder die Einheit 13 ist von einer Folie bzw. einem Folienzuschnitt vollständig umgeben unter Bildung der Innenpackung 10 mit Innen-Vorderwand 14, Innen-Stirnwand 15, Innen-Rückwand, Innen-Seitenwänden 16 und Innen-Bodenwand 17. Die allseits geschlossene Folienumhüllung ist mit Verschluss- bzw. Verbindungsnähten versehen, vorzugsweise durch thermisches Siegeln. Bei dem vorliegenden Ausführungsbeispiel sind Seitennähte 18, 19 im Bereich der Innen-Seitenwände 16 angeordnet, und zwar in der Ausführung als Flossennaht. Eine weitere, quergerichtete Verbindungsnaht, nämlich eine Quernaht 20, ist im Bereich der Innen-Rückwand angeordnet mit einer Erstreckung bis in die Seitenwände 16. Auch die Quernaht 20 ist vorzugsweise als Flossennaht ausgebildet.

Die Innenpackung 10 ist vorzugsweise in einer Außenpackung 21 angeordnet, vorliegend in der Ausführung als Klappschachtel mit Schachtelteil 22, Deckel 23 und Kragen 24.

Bei der Fertigung der Innenpackung 10 wird eine (vorbereitete) Folienbahn 25 (von oben) einer aufeinanderfolgend und mit Abstand voneinander transportierten Reihe von Zigarettengruppen bzw. Einheiten 13 zugeführt und unter Bildung eines ebenfalls fortlaufenden Folienschlauchs 26 um die Einheiten 13 herumgeformt. Die Folienbahn 25 wird zu diesem Zweck an einem Formaggregat 27 entlanggeführt, welches die Folienbahn 25 mit Hilfe von Formorganen, wie Formschultern 28, unter Bildung des Folienschlauchs 26 um die aufeinanderfolgenden Einheiten 13 herumformt, derart, dass eine durchgehend geschlossene Schlauchoberwand 29, schmale Schlauchseitenwände 30 und eine Schlauchunterwand entstehen, letztere aus Folienstreifen 31 und 32 der Bahn 25, die mit Hilfe von randseitigen Nahtstreifen 33, 34 unter Bildung einer fortlaufenden Schlauchnaht - entsprechend der Quernaht 20 der fertigen Innenpackung 10 - zu einer geschlossenen Schlauchunterwand miteinander verbunden werden.

Die anderweitig gefertigten Einheiten 13 werden bei quergerichteter Position der Zigaretten bzw. der Zigarettengruppe 11 in geordneten Abständen aufeinanderfolgend dem Formaggregat 27 zugeführt. Hierzu dient ein Gurtförderer 35 mit Abstandhaltern, vorzugsweise zu beiden Seiten jeder Einheit 13. Der Gurtförderer 35 endet in einem Bereich unmittelbar vor der Komplettierung des Folienschlauchs 26, sodass die Einheiten 13 danach von dem Folienschlauch 26 übernommen und transportiert werden. Die aufgrund entsprechender Formgebung abstehenden Nahtstreifen 33, 34 werden durch Zugwalzen 36 unterhalb des Folienschlauchs 26 erfasst. Zwei zusammenwirkende Zugwalzen 36 drücken die quergerichteten Nahtstreifen 33, 34 aneinander und übertragen Zugkräfte zum Transport des Folienschlauchs 26 mit Einheiten 13 in Förderrichtung.

Den Zugwalzen 36 folgt eine erste Siegelstation, nämlich um vertikale Achsen drehende Siegelräder 37, die die durch die Nahtstreifen 33, 34 gebildete Flosse erfassen und durch thermisches Siegeln die (Quer-)Naht 20 herstellen. Der Folienschlauch 26 liegt in diesem Bereich auf einer Bahnplatte 38 auf.

Der Folienschlauch 26 gelangt sodann mit den Einheiten 13 in eine weitere, zweite Siegelstation. In diesem Bereich werden die (quergerichteten) Seitennähte 18, 19 hergestellt durch Siegelorgane oberhalb und unterhalb der Bewegungsbahn des Folienschlauchs 26. Es handelt sich dabei um queraxial gelagerte, drehend angetriebene Siegel- und Schneidwalzen 39, 40. Jedes dieser Organe ist mit zwei diametral einander gegenüberliegenden Messern 41 versehen. Durch gesteuerte Drehbewegung der Schneidwalzen 39, 40 wird bei jeder Halbdrehung ein Trennschnitt ausgeführt, der eine Dicht- bzw. Innenpackung 10 komplettiert und zugleich eine erste Seitennaht 18 der nachfolgenden Packung 10 herstellt. Zu diesem Zweck sind zu beiden Seiten der Messer 41 jeweils langgestreckte Siegelbacken 42, 43 angeordnet. Durch das Zusammenwirken der einander zugeordneten Siegelbacken 42, 43 werden die beiden benachbarten Seitennähte 18, 19 in einem Arbeitstakt, nämlich entsprechend der Drehung der Schneidwalzen 39, 40 aufeinanderfolgend hergestellt, etwa zeitgleich mit der Ausführung des quergerichteten Trennschnitts.

Die Siegelbacken 42, 43 dienen zugleich als Halteorgane für das jeweilige Messer 41. Weiterhin sind Heizorgane, nämlich langgestreckte Heizpatronen 44 an bzw. in den Siegelbacken 42, 43 angeordnet.

Die Siegelbacken 42, 43 - mit den Messern 41 - sind an einem axial bzw. achsparallel liegenden Träger bzw. Messerhalter 45 angebracht. Die jeweils zwei einander gegenüberliegenden Messerhalter 45 sind jeweils an einer Welle 46 gelagert und durch entsprechend geformte Haltesegmente 47 auf der Welle 46 formschlüssig fixiert.

Eine wichtige innovative Technologie liegt in der Herstellung und Ausbildung der Seitennähte 18, 19, insbesondere der stirn- und bodenseitigen Endbereiche. Der Folienschlauch 26 wird mit exakter Positionierung der Einheiten 13 der Siegel- und Trennstation zugeführt, wobei zwischen den aufeinanderfolgenden Einheiten ein freier Schlauchabschnitt gebildet ist, nämlich ein Faltabschnitt 48. Dieser ist so bemessen - durch entsprechenden Abstand der Einheiten 13 - dass dieser freie Faltabschnitt geeignet ist, die Seitennähte 18, 19 benachbarter Packungen durch Zusammenführen von Schlauchoberwand 29 und Schlauchunterwand herzustellen.

Die Schlauchseitenwände 30 im Bereich des Faltabschnitts 48 bilden ein besonderes technisches Problem. Der betreffende Abschnitt der Schlauchseitenwände 30 wird nach innen gefaltet, und zwar durch ein gesondertes Faltorgan in der Ausführung eines Stechfalters 49, der durch Bewegung quer zur Längserstreckung des Folienschlauchs 26 die Bereiche des Faltabschnitts 48, also eines Seitenfaltabschnitts 50, nach innen faltet. Seitenabschnitte 50 sind die freien Bereiche der Schlauchseitenwände 30 zwischen aufeinanderfolgenden Einheiten 13.

Das Faltorgan 49 ist mit geringerer Breite ausgebildet als der Seitenfaltabschnitt 50 und vorliegend gabelförmig ausgebildet, also mit zwei im Abstand voneinander angeordneten Faltstegen 51. Diese sind hinsichtlich Gestaltung, Länge und Abstand voneinander so bemessen, dass während eines Falttaktes die Faltstege 51 zu beiden Seiten der Messer 41 bzw. der Siegelbacken 42, 43 wirken können. Der Stechfalter 49 ist so gelagert und angetrieben, dass der Faltschritt während eines Förderabschnitts des - kontinuierlich geförderten - Folienschlauchs 26 ausgeführt wird. Die Bewegungsbahn 52 des Stechfalters 49 ist schematisch dargestellt.

Zur Herbeiführung einer fehlerfreien, in der Struktur verwerfungsfreien Faltung des Seitenfaltabschnitts 50 ist dieser mit mindestens einem Trennschnitt bzw. Hilfsschnitt 53 versehen. Die einfachste, wirksame Ausführung des Hilfsschnitts 53 ist ein Trennschnitt quer zum Seitenfaltabschnitt 50, insbesondere über die volle Höhe der Schlauchseitenwände 30 in geradliniger Ausführung und mittig zwischen aufeinanderfolgenden Einheiten 13. Der Hilfsschnitt 53 teilt den Seitenfaltabschnitt 50 unter Bildung von einander gegenüberliegenden Folienkanten 54.

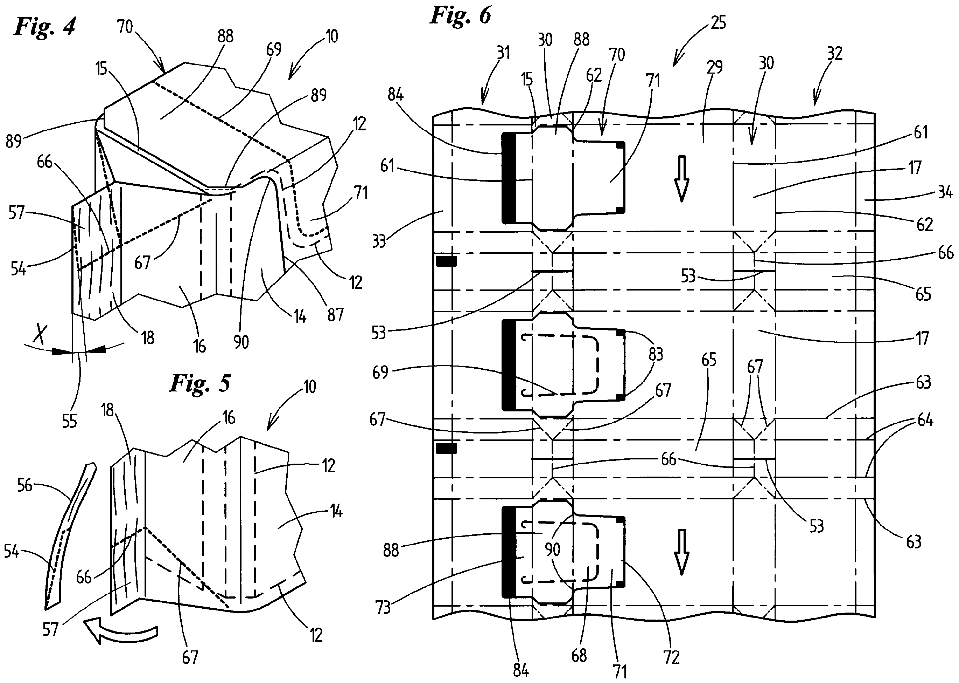

Die Hilfsschnitte 53 bewirken, dass bei der quergerichteten Faltbewegung des Stechfalters 49 zunächst eine Lücke bzw. eine Öffnung zwischen den durch den Hilfsschnitt geschaffenen Folienkanten 54 entsteht. Bei fortgesetzter Bewegung des Faltorgans 51 und etwa zeitgleicher Faltung der Bereiche zur Bildung der Seitenwände 16 und der Seitennähte 18, 19 gelangen die Faltlappen neben den Hilfsschnitten 53 in den Bereich zwischen den Flossen der Seitennähte 18, 19 (Fig. 4) unter Bildung eines etwa trapezförmigen Faltlappens 57. Dieser ist vorzugsweise komplett zwischen den Faltlappen der Flossennaht 18, 19 eingebettet und verankert. Die Folienkante 54 des Hilfsschnitts 53 ist dabei unter einem Winkel 55 (Fig. 4) zur freien Randkante der Seitennaht 18, 19 gerichtet.

Die im Bereich der Schneid- und Siegelstation komplettierten Innenpackungen 10 werden im Anschluss an diese Station zur weiteren Bearbeitung abtransportiert, und zwar vorliegend auf einem (unteren) Abschubgurt 93 in Verbindung mit einem die Packungen 10 an der Oberseite erfassenden Auslaufgurt 94.

In einem weiteren Bearbeitungsschritt kann entsprechend Fig. 5 ein Randstreifen 56 der Seitennaht 18, 19 abgetrennt werden, sodass zum einen die Flosse der Seitennähte 18, 19 eine geringere Breite aufweist und zum anderen der nach innen gefaltete Faltlappen 57 bündig mit dem freien Rand der Seitennähte 18, 19 liegt. Danach werden die Flossen der Seitennähte 18, 19 bis zur Anlage an den Innen-Seitenwänden 16 umgefaltet, vorzugsweise zur Rückseite, und ggf. durch thermische Einwirkung mit den Seitenwänden 16 verbunden.

Die Herstellung der Folien- bzw. Innenpackungen 10 und insbesondere die Fertigung der Seitennähte 18, 19 unter Mithilfe der Hilfsschnitte 53 erfordert eine präzise Gestaltung des Folienschlauchs 26. In Fortsetzung des Formaggregats 27 sind seitliche Führungs- und Formorgane für den Folienschlauch 26 vorgesehen, insbesondere im Querschnitt U-förmige Führungsprofile 58 zu beiden Seiten der Bewegungsbahn des Folienschlauchs 26 im Anschluss an die Formschultern 28. Die Führungsprofile 58 umfassen den Folienschlauch 26 mindestens in einem seitlichen Bereich durch vorzugsweise U-förmige Querschnittsform der Profile 58. Diese sind hinsichtlich Form und Abmessungen an den Folienschlauch 26 angepasst, sodass eine exakte Ausbildung des Folienschlauchs 26 im Bereich der Schlauchseitenwände 30 gewährleistet ist.

Eine weitere Maßnahme zur Gewährleistung der präzisen Faltung im Bereich des Faltabschnitts 48 ist die Sicherung der Relativstellung der Einheiten 13 innerhalb des Folienschlauchs 26, also die Gewährleistung eines exakt bemessenen Faltabschnitts 48. Zu diesem Zweck sind oberhalb des Folienschlauchs 26 (elastische) Andrückorgane angebracht, die ein Andrücken der Schlauchoberwand 29 an die Oberseite der Einheiten 13, also insbesondere an eine nach oben gerichtete Vorderwand des Trays 12 bewirken. Die Andrückkraft ist so gewählt, dass der Reibungswiderstand zwischen Schlauchoberwand 29 und Einheiten 13 erhöht, die (kontinuierliche) Förderbewegung des Folienschlauchs 26 aber nicht beeinträchtigt ist.

Vorliegend besteht das Andrückorgan aus einem Gurt bzw. Umlaufband 59, welches mit einem unteren Trum in Förderrichtung des Folienschlauchs 26 angetrieben ist, vorzugsweise mit gleicher Geschwindigkeit. An dem Umlaufband 59 sind elastische Andrückorgane angebracht, die Kontakt erhalten mit der Schlauchoberwand 29. Die Andrückorgane bestehen vorliegend aus kammartig ausgebildeten Andrückstegen 60, jeweils mit einer Mehrzahl von in Querreihen angeordneten, langgestreckten Fingern, die elastisch verformbar an der Oberseite des Folienschlauchs 26 anliegen.

Eine Besonderheit ist die Vorbereitung der Folienbahn 25 für die Herstellung der Dicht- bzw. Innenpackungen 10. Fig. 6 zeigt einen Abschnitt der bearbeiteten Folienbahn 25. Die jeder Innenpackung 10 zugeordneten, langgestreckten Zuschnitte sind innerhalb der Folienbahn 25 quergerichtet, wobei die Innen-Vorderwand 14 etwa im mittleren Bereich der Folienbahn 25 positioniert ist. Die Innen-Rückwand wird durch Teilwände gebildet, die in randseitigen Folienstreifen 31, 32 positioniert sind.

Durch (virtuelle) Faltlinien - strichpunktierte Linien - sind die für die Faltung relevanten Bereiche der Folienbahn 25 markiert. In Längsrichtung der Folienbahn 25 verlaufende parallele Längsfaltlinien 61, 62 dienen zur Begrenzung der Innen-Stirnwand 15 einerseits und der Innen-Bodenwand 17 andererseits sowie der Schlauchseitenwände 30. Die Faltlinien 61, 62 erstrecken sich durchgehend entlang der Folienbahn 25 und bilden in Längsrichtung des Folienschlauchs 26 verlaufende obere und untere Seitenkanten. Weiterhin sind Querfaltlinien 63, 64 zur Begrenzung von Teilbereichen der Innen-Seitenwände 16 vorgesehen und zur Begrenzung eines mittleren, quergerichteten Folienstreifens 65, der - nach Ausführung des quergerichteten Trennschnitts - die Flossen der Seitennaht 18, 19 bildet.

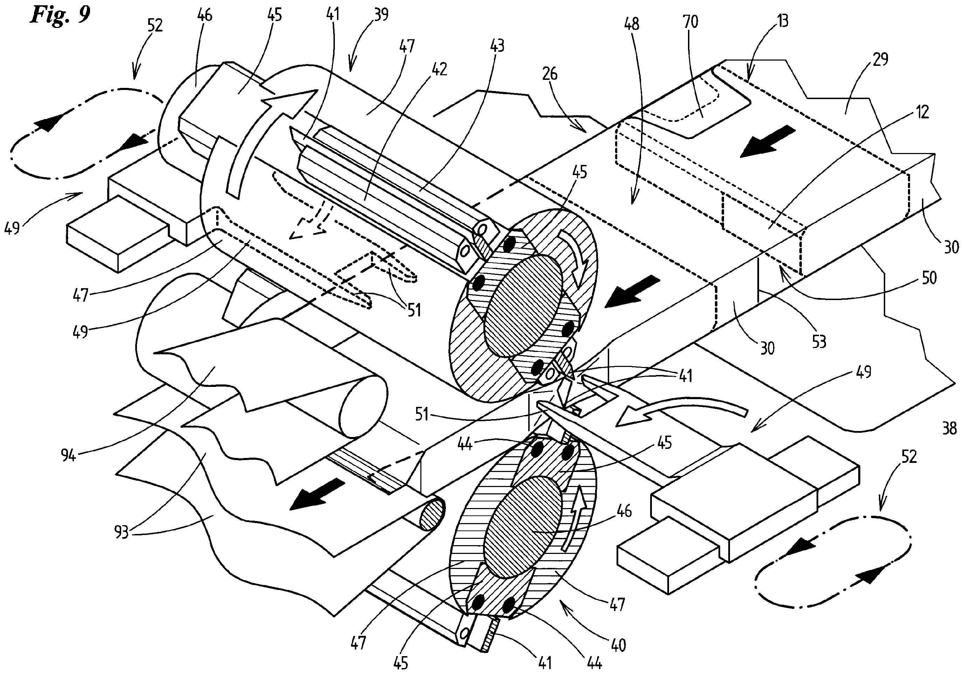

Der Hilfsschnitt 53 wird vorzugsweise an der (ungefalteten) Folienbahn 25 angebracht, und zwar über die Breite des Materialstreifens zwischen den Faltlinien 61, 62. In dem Bereich des Faltabschnitts 48 (des Folienschlauchs 26), also zwischen den Faltlinien 63 benachbarter Bereiche für einen Packungszuschnitt, befinden sich in dem Materialstreifen für Innen-Stirnwand 15 und Innen-Bodenwand 17, also im Bereich des Seitenfaltabschnitts 50 der Schlauchseitenwand 30, weitere Faltlinien, nämlich eine Mittenfaltlinie 66 - im Bereich der Flossen - und Schrägfaltlinien 67. Diese Faltlinien führen zu Faltkanten beim Einfalten des Seitenfaltabschnitts 50 (Fig. 9) durch den Stechfalter 49. Je nach dem Faltprinzip können weitere bzw. andere Hilfsschnitte in dem vorgenannten Bereich angeordnet sein, insbesondere auch entlang von Faltlinien, etwa entlang der Faltlinie 66 und/oder entlang von Faltlinien 61, 62. Die eventuell zusätzlichen Hilfsschnitte sind so angeordnet und hinsichtlich der Länge ausgewählt, dass der Faltprozess im Bereich des Faltabschnitts 48 zu einem fehlerfreien Faltbild ohne Wellen- und unerwünschte Faltenbildung führt und darüber hinaus einen dichten Abschluss der Seitennähte 18, 19 gewährleisten.

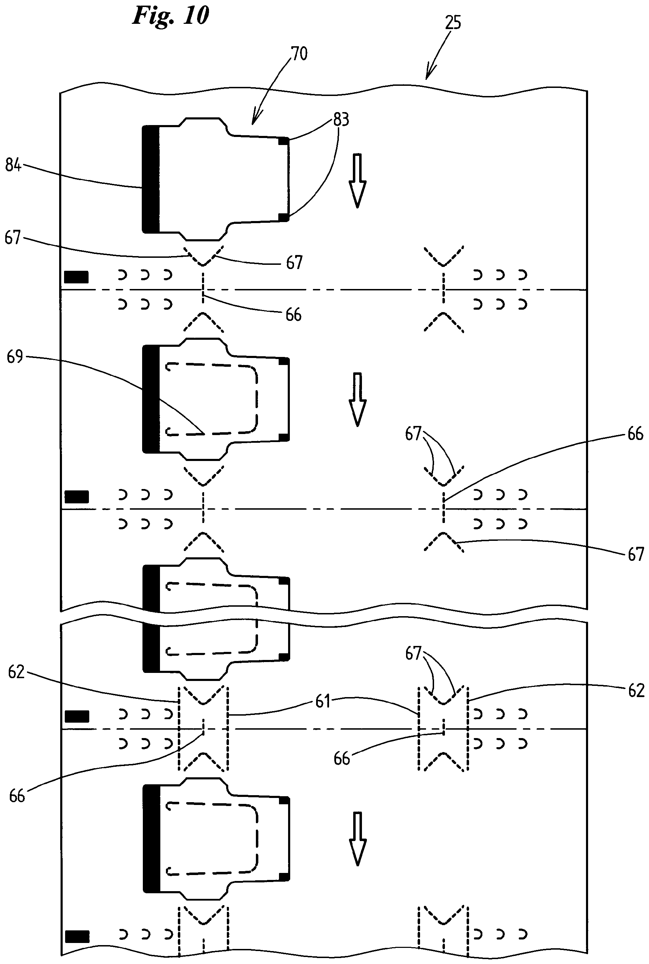

Zusätzlich zu den Hilfsschnitten 53 kann die Bildung der korrekten Faltungen an den Enden der Seitennähte 18, 19 durch Vorbereitung der Faltlinien, nämlich der Längsfaltlinien 61, 62 und/oder der Mittelfaltlinien 66 und/oder der Schrägfaltlinien 67 bewirkt werden. Fig. 10 zeigt zwei Abschnitte einer Folienbahn 25 mit unterschiedlichen Beispielen für hinsichtlich des Faltverhaltens vorbereiteten Faltlinien. Im oberen Teilbereich der Folienbahn 25 sind die Schrägfaltlinien 67 und (ein Teilstück) die Mittelfaltlinie 66 für den Faltprozess vorbereitet, insbesondere durch Prägen oder durch Teilschnitte der Folienbahn 25, also durch Schnitte, die sich über einen Teil des Querschnitts erstrecken, sodass die Folie einen geringeren Faltwiderstand aufweist, jedoch insgesamt geschlossen bleibt. Bei einer mehrlagigen Folie können die Trennschnitte an der Innenseite der Folienbahn 25 eine Lage erfassen, um die Faltbarkeit zu verbessern.

Bei dem Beispiel im unteren Teil der Fig. 10 sind ebenfalls die Schrägfaltlinien 67 in entsprechender Weise vorbereitet. Darüber hinaus die Längsfaltlinien 61, 62 im Bereich des Faltabschnitts und (in kürzerer Ausbildung) die Mittelfaltlinie 66.

Ein anderes innovatives Thema betrifft die Ausbildung einer Öffnungshilfe der Innenpackung 10. Die Folienbahn 25 ist zur Bildung einer Entnahmeöffnung vorbereitet, und zwar durch eine vorzugsweise U-förmig ausgebildete Schwächungslinie der Folie, vorliegend eine Perforationslinie 69 im Bereich der Entnahmeöffnung für die fertige Innenpackung 10. Die Entnahmeöffnung und damit die Öffnungslasche 68 erstreckt sich von einem oberen, stirnseitigen Bereich der Innen-Vorderwand 14, quer und mittig über die Innen-Stirnwand 15 und mit einem Endbereich in der Innen-Rückwand, vorliegend in dem Folienstreifen 31 als stirnseitiger Teilbereich der Innen-Rückwand. Beim erstmaligen Öffnen der Packung 10 wird die Öffnungslasche 68 freigelegt, wodurch die entsprechende Entnahmeöffnung geschaffen ist. Zum Wiederverschließen wird die Öffnungslasche 68 in die Ausgangsstellung zurückbewegt.

Hierfür ist ein Verschluss- bzw. Betätigungsetikett 70 aus einem gesonderten Zuschnitt vorgesehen. Dieses wird - mit allseitigem Überstand - außen über die Öffnungslasche 68 gelegt und mit Kleber lösbar an der Innenpackung 10 fixiert. Das Betätigungsetikett 70 ist im frontseitigen Bereich, nämlich am freien Ende einer Lasche 71 im Bereich der Innen-Vorderwand 14, mit einer leimfreien Grifflasche 72 versehen zum manuellen Erfassen des Betätigungsetiketts 70 oder zur Verbindung desselben mit einem Teil der Außenpackung 21. Mit einem gegenüberliegenden Verbindungsschenkel 73 ist das Betätigungsetikett 70 (dauerhaft) an der Innen-Rückseite bzw. am Folienstreifen 31 fixiert. Beim Öffnen der Innenpackung 10 wird das Betätigungsetikett 70 mit Hilfe der Grifflasche 72 von der Innenpackung 10 abgezogen, und zwar zunächst die Lasche 71, dann der Bereich der Innen-Stirnwand 15 bis zur Innen-Rückwand. Die Öffnungslasche 68 wird dabei ebenfalls in die Öffnungsstellung bewegt, wodurch eine Entnahmeöffnung der Innenpackung 10 frei kommt.

Bei der Fertigung der Innenpackung 10 wird vorzugsweise so vorgegangen, dass - wie aus Fig. 6, Fig. 7, Fig. 10 ersichtlich - als erstes das Betätigungsetikett 70 der Öffnungshilfe in packungsgerechter Position an der Folienbahn 25 angebracht wird. Danach werden die Schnitte angebracht, vorzugsweise derart, dass etwa zeitgleich bzw. durch ein gemeinsames Schneidorgan die Hilfsschnitte 53 einerseits und die Perforationslinie 69 im Bereich des Betätigungsetiketts 70 andererseits angebracht werden. Vorteilhaft ist eine Technologie, nach der alle die Folienbahn 25 betreffenden Bearbeitungen, also einschließlich der Schwächungs- bzw. Perforationslinien für (ausgewählte) Faltlinien, in einer gemeinsamen Schneid- bzw. Prägestation durchgeführt werden, und zwar an der zu den bereits aufgebrachten Betätigungsetiketten 70 gegenüberliegenden Seite der Folienbahn 25, also der Innenseite in Bezug auf die Innenpackung 10.

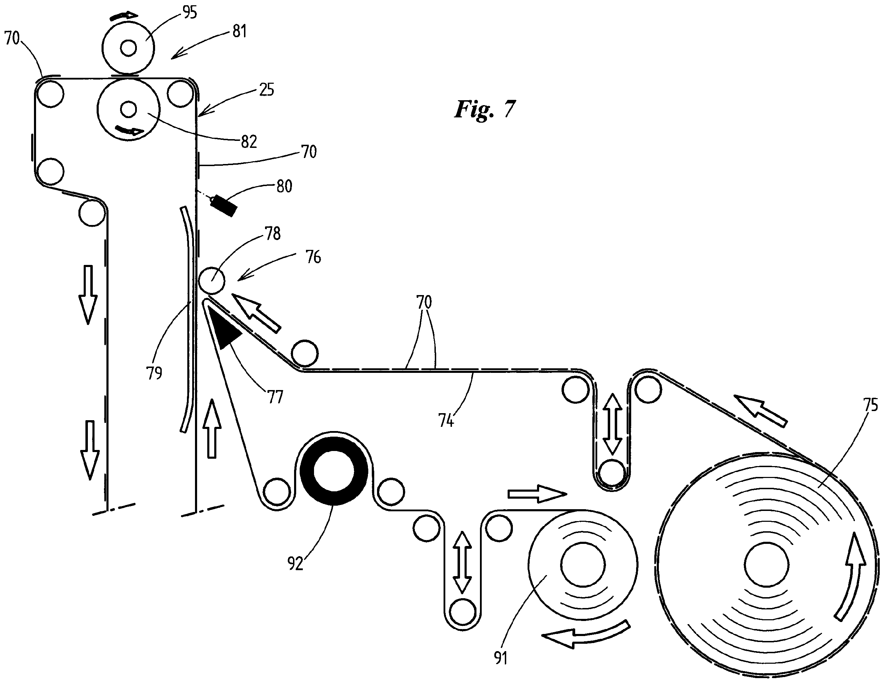

Ein Ausführungsbeispiel für die Technologie zur Vorbereitung der Folienbahn 25 ist schematisch aus Fig. 7 ersichtlich. Die als Einzelzuschnitte vorbereiteten Betätigungsetiketten 70 werden auf einem Trägerband 74 zur Verfügung gestellt. Dieses wird von einer Bobine 75 abgezogen. Das Trägerband 70 mit den unmittelbar aufeinanderfolgend angeordneten Betätigungsetiketten 70 wird einer Übertragungsstation 76 zugeführt. Hier wird jeweils ein Betätigungsetikett 70 von dem Trägerband 74 abgenommen und auf die entsprechend positionierte Folienbahn 25 aufgetragen. Die Übertragungsstation 76 ist mit einem Abschälorgan versehen, vorliegend mit einem keilförmigen Umlenkstück 77 für das Trägerband 74. Im Umlenkbereich wird das Betätigungsetikett 70 vom Band 74 gelöst und über eine Andrückrolle 78 an einen aufrechten Abschnitt der Folienbahn 25 übertragen, und zwar im Bereich einer aufrechten Stützplatte 79.

Das "leere" Trägerband 74 wird im Anschluss an das Umlenkstück 77 über weitere Umlenkrollen einer Sammelbobine 91 zugeführt. Dabei läuft das Trägerband 74 über eine Antriebswalze 92.

Die Übergabe der Betätigungsetiketten 70 an die Folienbahn 25 ist so gesteuert, dass ein packungsgerechter Abstand im Bereich der Folienbahn 25 eingehalten wird. Ein (optoelektronischer) Sensor 80 überprüft die korrekte Anordnung und Stellung der Betätigungsetiketten 70.

Im Bereich eines horizontalen Förderabschnitts der Folienbahn 25 befindet sich ein Schneid- bzw. Stanzaggregat 81 mit einer Schneidwalze 82 unterhalb der Bahn 25, also gegenüberliegend zur Seite mit den Betätigungsetiketten 70 und einer oberen Gegenwalze 95. Die Schneidwalze 82 ist so ausgebildet, dass bei einer (Teil-)Drehung sowohl die Hilfsschnitte 53 als auch die Perforationen 69 für die Öffnungslasche an der Bahn 25 angebracht werden. Vorzugsweise werden auch die Markierungen für die Faltlinien 61, 62 und/oder 66 und/oder 67 im Bereich dieser Station angebracht, vorzugsweise durch die gemeinsame Bearbeitungs- bzw. Schneidwalze 82. Diese ist demnach längs des Umfangs mit auf die herzustellenden Stanzschnitte, Teilstanzschnitte etc. ausgerichtet.

Nach weiterer Umlenkung der verarbeitungsfertigen Folienbahn 25 gelangt diese in eine Abwärtsrichtung, wird also in einer aufrechten Ebene dem Formaggregat 27 zugeführt.

Das Betätigungsetikett 70 ist in besonderer Weise ausgebildet. Zum einen geht es um eine zuverlässige Erfassung der Stellung des Betätigungsetiketts 70 an der Folienbahn 25. Zu diesem Zweck ist jedes Betätigungsetikett 70 an der Außenseite mit mehreren, verteilt angeordneten Markierungen bzw. Druckmarken versehen, die durch Sensoren, insbesondere durch den Sensor 80, erfasst werden. Vorzugsweise sind zwei im Abstand voneinander angeordnete Druckmarken 83 an einem Randbereich des Etiketts 70 außen angebracht, insbesondere an den Enden der streifenförmigen Grifflasche 72. Mit Abstand von diesen ist mindestens eine weitere Druckmarke an dem Etikett 70 angebracht, nämlich eine Streifenmarke 84 im Bereich des Verbindungsschenkels 73, also an einem zu den Druckmarken 83 gegenüberliegenden Randbereich. Durch diese Druckmarken ist auch die korrekte Winkelstellung der Betätigungsetiketten 70 prüfbar.

Eine weitere Besonderheit der Innovation ist die Ausbildung des Betätigungsetiketts 70 hinsichtlich der Außenkontur. Die Lasche 71 im Bereich der Innen-Vorderwand 14 ist mit reduzierter Breite ausgebildet, nämlich derart, dass die Lasche 71, vorzugsweise einschließlich Grifflasche 72, innerhalb einer bei dem Packungstyp der Außenpackung 21 üblichen Ausnehmung 85 einer Kragen-Vorderwand 86 des Kragens 24 liegt. Vorzugsweise sind Laschenränder 87 konvergierend angeordnet bzw. divergierend in Richtung zur Innen-Stirnwand 15.

Im Bereich der Innen-Stirnwand 15 ist das Betätigungsetikett 70 mit einer Verbreiterung ausgebildet, nämlich mit einem Abdeckschenkel 88, der sich vorzugsweise über die volle Fläche der Innen-Stirnwand 15 erstreckt, also diese (annähernd) vollflächig abdeckt. Der Abdeckschenkel 88 als Teil des Betätigungsetiketts 70 ist vorzugsweise an die Kontur der Innen-Stirnwand 15 angepasst, vorliegend, nämlich bei einer Außenpackung 21 in der Ausführung als Oktagonal Pack mit schräggerichteten, aufrechten Packungskanten mit Abschrägungen 89 an jeder Ecke des Abdeckschenkels 88 versehen.

An den Abdeckschenkel 88 schließt im Bereich der Innen-Rückwand der vorzugsweise mit einer geringeren Breite ausgebildete Verbindungsschenkel 73 an.

Bei der Betätigung, nämlich beim Öffnen des Betätigungsetiketts 70, wird demnach im Anschluss an die Lasche 71 der stirnseitige Abdeckschenkel 88 von der Innen-Stirnwand 15 (komplett) abgezogen. Damit es nicht zu unerwünschten Spannungen oder möglicherweise Rissbildungen kommt, ist ein kontinuierlicher, insbesondere gerundeter Übergang 90 von der Lasche 71 zum Abdeckschenkel 88 vorgesehen.

Die Ausbildung des Betätigungsetiketts 70 steht vorzugsweise in technologischer Verbindung mit der vorliegenden Innovation im Übrigen. Die besondere Ausführung des Betätigungsetiketts 70 kann aber hiervon unabhängig auch bei anderen Ausführungen von Öffnungshilfen bzw. von Innenpackungen zur Anwendung kommen. Diese technische Unabhängigkeit gilt auch für das Herstellungsverfahren der Folienzuschnitte bzw. für die Vorbereitung der Folienbahn 25.

Ein besonderes Thema ist die Anbringung von Entlüftungsöffnungen 96 an der Folienbahn 25 im Hinblick auf eine Entlüftung der Innenpackung 10 beim Anbringen der Seitennähte 18, 19. Die Entlüftungsöffnungen 96 sind als Stanzungen in der Folienbahn 25 packungsgerecht angeordnet. Vorteilhaft ist die Ausbildung der Entlüftungsöffnungen 96 als U-Stanzung 97 unter Bildung einer Folienzunge 98.

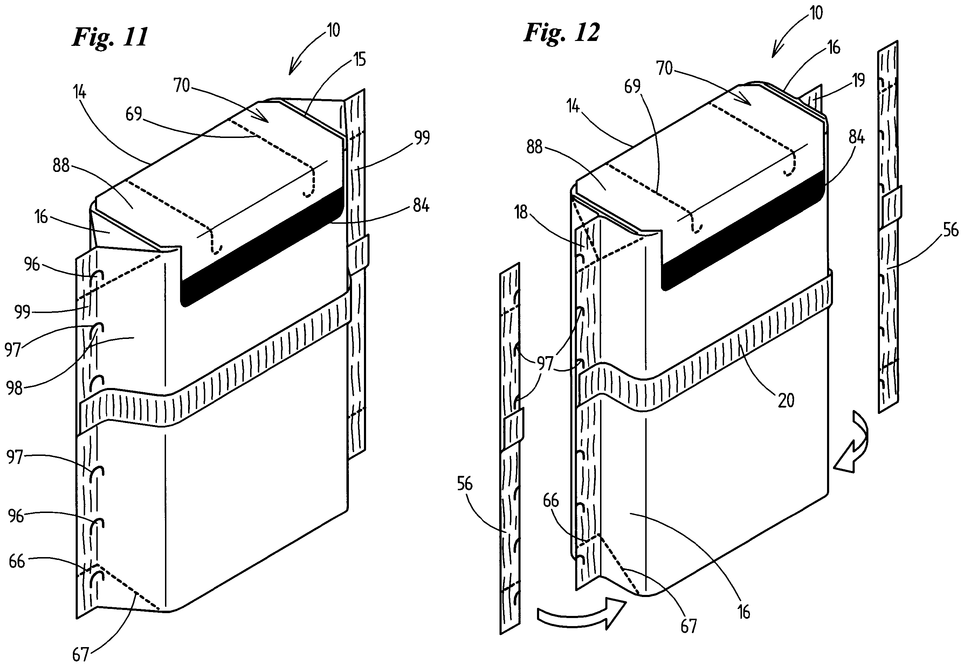

Wichtig ist die Relativstellung der Entlüftungsöffnungen 96 bzw. der U-Stanzungen 97. Die Folienbahn 25 weist je zwei Gruppen von in einer Querreihe ausgerichteten U-Stanzungen 97 auf. Vorteilhaft sind jeweils drei nebeneinanderliegende U-Stanzungen 97 benachbart zu den Längsrändern der Folienbahn 25, derart, dass bei der fertigen Innenpackung 10 die geschaffenen Entlüftungsöffnungen 96 im Wesentlichen über die Höhe bzw. Länge der Seitennähte 18, 19 verteilt ist (Fig. 11, Fig. 12). Weiterhin ist die Relativstellung der U-Stanzungen 97 von Bedeutung. Die durch die Stanzungen geschaffenen Folienzungen 98 sind aufgrund der Anordnung der U-Stanzung 97 quer zur Längserstreckung der Folienbahn 25 gerichtet, weisen also zu einem Seitenrand der Folienbahn 25.

Eine besondere Variante der Herstellung der Innenpackung ist in Fig. 11 und Fig. 12 thematisiert. Die gezeigte Technologie ist ansatzweise in DE 10 2013 009 472 A1 dargestellt.

In einer Siegelstation in der Ausführung analog zu Fig. 9 wird eine Quersiegelnaht 99 in der beschriebenen Weise angebracht. Die als Flossennaht ausgebildete Verbindung ist mit einem größeren Abstand vom Packungsinhalt - Einheit 13 - positioniert. Die Quersiegelnähte 99 sind in Bezug auf die Entlüftungsöffnungen 96 so angebracht, dass mindestens ein Teilbereich der Öffnungen für die weitere, nachfolgende Entlüftung frei liegt. Vorliegend, nämlich bei der Ausbildung als U-Stanzung 97, ist etwa der halbe Bereich der Entlüftungsöffnung 96 nach Anbringen der Quersiegelnaht 99 frei.

Im Bereich einer weiteren, nachfolgenden Siegelstation wird eine weitere Siegelnaht angebracht, neben der Quersiegelnaht 99 und eng am Packungsinhalt (Fig. 12). Diese zweite Siegelnaht entspricht der Seitennaht 18, 19. Die (Seiten-)Naht 18, 19 liegt unmittelbar neben der Quersiegelnaht 99, sodass die Entlüftungsöffnungen 96 durch die Seitennähte 18, 19 komplett geschlossen sind. Die halbe Kontur der U-Stanzung liegt im Bereich dieser Siegelnaht.

Danach wird ein seitlicher Randstreifen der Siegelnähte abgetrennt, analog zu dem Randstreifen 56 gemäß Fig. 1, Fig. 5. Die Flosse der Seitennähte 18, 19 wird gegen die zugeordnete Innen-Seitenwand 16, 17 gefaltet und vorzugsweise an dieser durch Siegeln fixiert.

Die Technologie für die Umsetzung des Verfahrens für die Ausführungen gemäß Fig. 11, Fig. 12 kann dem Verfahren und der Vorrichtung in DE 10 2013 009 472 A1 entsprechen.

**Bezugszeichenliste:**

| | | | |
|---|---|---|---|
| 10 | Innenpackung | 57 | Faltlappen |
| 11 | Zigarettengruppe | 58 | Führungsprofil |
| 12 | Tray | 59 | Umlaufband |
| 13 | Einheit | 60 | Andrücksteg |
| 14 | Innen-Vorderwand | 61 | Längsfaltlinie |
| 15 | Innen-Stirnwand | 62 | Längsfaltlinie |
| 16 | Innen-Seitenwand | 63 | Querfaltlinie |
| 17 | Innen-Bodenwand | 64 | Querfaltlinie |
| 18 | Seitennaht | 65 | Folienstreifen |
| 19 | Seitennaht | 66 | Mittenfaltlinie |
| 20 | Quernaht | 67 | Schrägfaltlinie |
| 21 | Außenpackung | 68 | Öffnungslasche |
| 22 | Schachtelteil | 69 | Perforationslinie |
| 23 | Deckel | 70 | Betätigungsetikett |
| 24 | Kragen | 71 | Lasche |
| 25 | Folienbahn | 72 | Grifflasche |
| 26 | Folienschlauch | 73 | Verbindungsschenkel |
| 27 | Formaggregat | 74 | Trägerband |
| 28 | Formschulter | 75 | Bobine |
| 29 | Schlauchoberwand | 76 | Übertragungsstation |
| 30 | Schlauchseitenwand | 77 | Umlenkstück |
| 31 | Folienstreifen | 78 | Andrückrolle |
| 32 | Folienstreifen | 79 | Stützplatte |
| 33 | Nahtstreifen | 80 | Sensor |
| 34 | Nahtstreifen | 81 | Schneidaggregat |
| 35 | Gurtförderer | 82 | Schneidwalze |
| 36 | Zugwalze | 83 | Druckmarke |
| 37 | Siegelrad | 84 | Streifenmarke |
| 38 | Bahnplatte | 85 | Ausnehmung |
| 39 | Schneidwalze | 86 | Kragen-Vorderwand |
| 40 | Schneidwalze | 87 | Laschenrand |
| 41 | Messer | 88 | Abdeckschenkel |
| 42 | Siegelbacke | 89 | Abschrägung |
| 43 | Siegelbacke | 90 | Übergang |
| 44 | Heizpatrone | 91 | Sammelbobine |
| 45 | Messerhalter | 92 | Antriebswalze |
| 46 | Welle | 93 | Abschubgurt |
| 47 | Haltesegment | 94 | Auslaufgurt |
| 48 | Faltabschnitt | 95 | Gegenwalze |
| 49 | Stechfalter | 96 | Entlüftungsöffnung |
| 50 | Seitenfaltabschnitt | 97 | U-Stanzung |
| 51 | Faltsteg | 98 | Folienzunge |
| 52 | Bewegungsbahn | 99 | Quersiegelnaht |
| 53 | Hilfsschnitt | | |
| 54 | Folienkante | | |
| 55 | Winkel | | |
| 56 | Randstreifen | | |

## Patentansprüche

1. Verfahren zum Herstellen von Packungen (10) aus vorzugsweise feuchtigskeits- und aromadichter Folie für Zigaretten, bei der eine Zigarettengruppe (11), vorzugsweise als Einheit (13) mit einem die Zigarettengruppe (11) teilweise umgebenden Innenkragen von einem Folienzuschnitt umgeben ist unter Bildung von seitlichen Verschlussnähten in der Ausführung als Flossennaht, wobei aufeinanderfolgend transportierte Zigarettengruppen (11) bzw. Einheiten (13) fortlaufend von einer Folienbahn (25) unter Bildung eines Folienschlauchs (26) umhüllt und in einer Siegel- und Trennstation im Bereich eines Faltabschnitts (48) des Folienschlauchs (26) quergerichtete Verbindungsnähte sowie zwischen diesen Trennschnitte zum Herstellen jeweils einer Packung (10) angebracht werden, **dadurch gekennzeichnet, dass** im Bereich des Faltabschnitts (48) Hilfsschnitte (53) in bzw. an der Folienbahn (25) angebracht sind zur Bildung einer geordneten, randseitigen Faltung des Folienschlauchs im Faltabschnitt (48), derart, dass durch Einfalten von Bereichen des Folienschlauchs (26) Faltlappen desselben im Bereich zwischen Faltlappen bzw. Flossen der quergerichteten Verbindungsnähte (18, 19) eingefaltet und bei der Herstellung der Flossennähte mit diesen verbunden, nämlich zwischen den Flossen eingebettet werden.

2. Verfahren nach Anspruch 1, **dadurch gekennzeichnet, dass** im Bereich des Faltabschnitts (48), vorzugsweise mittig zwischen aufeinanderfolgenden Zigarettengruppen (11) oder Einheiten (13), mindestens ein Folienschnitt angebracht ist, insbesondere ein sich im Bereich einer Schlauchseitenwand (30) des Folienschlauchs (26) erstreckender, quergerichteter Hilfsschnitt (53), wobei ein Faltorgan zum Falten der Folie im Bereich des Faltabschnitts (48), insbesondere ein Stechfalter (49) mit zwei im Abstand voneinander angeordneten Faltstegen (51), zu beiden Seiten des Hilfsschnitts (53) beim Falten durch Eindringen in den Folienschlauch (26) im Bereich des Faltabschnitts (48) wirksam ist.

3. Verfahren nach Anspruch 1 oder 2, **dadurch gekennzeichnet, dass** Faltlinien im seitlichen Bereich des Faltabschnitts (48), insbesondere in der Schlauchseitenwand (30), durch Vorbereitung insbesondere im Bereich der ungefalteten Folienbahn (25) mit mechanischen Markierungen versehen werden, insbesondere mit Prägungen und/oder Trennschnitten bzw. Teilschnitten der Folie über einen Teilquerschnitt derselben.

4. Verfahren nach Anspruch 1 oder einem der weiteren Ansprüche, **dadurch gekennzeichnet, dass** die Folienbahn (25) entsprechend dem herzustellenden Faltbild im Bereich des Faltabschnitts (48) mit Präge- bzw. Schwächungslinien versehen ist, insbesondere mit V-förmigen Linien entsprechend Schräglinien (67) der Faltgeometrie und/oder mit in Längsrichtung der Folienbahn verlaufenden Linien entsprechend parallelen Längsfaltlinien 61, 62 und/oder mit Linien im Bereich von in Längsrichtung verlaufenden Mittenfaltlinien (66).

5. Verfahren nach Anspruch 4, **dadurch gekennzeichnet, dass** die Präge- bzw. Materialschwächungslinien entsprechend den Faltlinien und/oder Hilfsschnitte (53) und/oder Perforationslinien (69) zur Definition von Öffnungslaschen (68) der Innenpackung (10) im Bereich einer gemeinsamen Schneid- bzw. Stanzstation an der Folienbahn (25), insbesondere an der der Innenseite der Innenpackung (10) entsprechenden Seite der Folienbahn, vorzugsweise durch eine entsprechend angeordnete Schneidwalze (82) mit Gegenwalze (95).

6. Verfahren nach Anspruch 1 oder einem der weiteren Ansprüche, **dadurch gekennzeichnet, dass** die Folienbahn (25) mit durch Stanzen hergestellten Entlüftungsöffnungen (96) der Innenpackung (10) versehen wird, insbesondere durch U-förmige Stanzungen (97), wobei die U-Stanzungen (97) so angebracht sind, dass durch die Stanzung gebildete Materialzungen (98) quer zur Längserstreckung der Folienbahn (25) gerichtet sind.

7. Verfahren nach Anspruch 6 oder einem der weiteren Ansprüche, **dadurch gekennzeichnet, dass** die Entlüftungsöffnungen, (96) insbesondere aufgrund von U-Stanzungen (97), zu beiden Seiten einer gedachten Trennlinie der Folienbahn (25) zur Bildung von Zuschnitten für die Innenpackung (10) angeordnet sind, insbesondere in der Weise, dass jeweils eine Anzahl Stanzungen (97) neben dem Trennschnitt der Zuschnitte in Ausrichtung entlang einer gedachten Querlinie angeordnet sind, derart, dass die Innenpackung (10) nach Anbringen einer Flossennaht bzw. Seitennaht (18, 19) eine Reihe von über die Höhe verteilten Entlüftungsöffnungen (96) aufweist.

8. Verfahren nach Anspruch 7 oder einem der weiteren Ansprüche, **dadurch gekennzeichnet, dass** die Entlüftungsöffnungen (96), insbesondere die U-Stanzungen (97), vorzugsweise mittig entlang einer Schnittlinie zum Abtrennen einer ersten Teilnaht von der zweiten Teilnaht im Bereich derselben Flossenfaltung.

9. Verfahren nach Anspruch 2, **dadurch gekennzeichnet, dass** Organe zum Herstellen der quergerichteten Verbindungsnähte (18, 19), insbesondere Siegelbacken (42, 43), sowie Messer (41) zum Anbringen des quergerichteten Trennschnitts des Folienschlauchs (26) einerseits und die Arbeitsweise der Faltorgane (49) andererseits derart aufeinander abgestimmt sind, dass durch das Faltorgan (49) nach innen gefaltete Faltlappen zwischen den Flossen der quergerichteten Verbindungsnähte (18, 19) Aufnahme finden unter Bildung von etwa trapezförmigen Faltlappen (57), die von einer durch den Hilfsschnitt (53) gebildeten Materialkante (54) begrenzt sind.

10. Verfahren nach Anspruch 1 oder einem der weiteren Ansprüche, **gekennzeichnet durch** folgende Merkmale:
a) die Packung (10) aus Folie weist eine Öffnungshilfe auf mit einem aus einem gesonderten Zuschnitt bestehenden Betätigungsetikett (70) zum Öffnen und Schließen einer Entnahmeöffnung,
b) das Betätigungsetikett (70) wird positionsgerecht an der ungefalteten, ebenen Folienbahn (25) zum Herstellen der Packungen (10) angebracht,
c) eine Schwächungslinie, insbesondere eine U-förmige Perforationslinie (69) zur Begrenzung einer Öffnungslasche (68) wird im Bereich der ungefalteten, ebenen Folienbahn (25) angebracht, vorzugsweise nach dem Aufbringen des Betätigungsetiketts (70) durch Stanzung bzw. Perforation der Folie an der zum Betätigungsetikett (70) gegenüberliegenden Seite.

11. Verfahren nach Anspruch 1 oder einem der weiteren Ansprüche, **dadurch gekennzeichnet, dass** Stanzungen und/oder Materialschwächungen der Folie für die Herstellung der Packung (10) im Bereich der ungefalteten Folienbahn (25) hergestellt werden, vorzugsweise derart, dass Hilfsschnitte (53) und Perforationslinien (69) für die Öffnungslasche (68) etwa zeitgleich, insbesondere durch ein gemeinsames Schneid- bzw. Stanzorgan (82) angebracht werden, wobei vorzugsweise das Stanzorgan (82) auf der zum Betätigungsetikett (70) gegenüberliegenden Seite der Folienbahn (25) angeordnet ist.

12. Verfahren nach einem der Ansprüche 10-11, **gekennzeichnet durch** folgende Merkmale:
a) die korrekte Positionierung des Betätigungsetiketts (70) an der Packung (10) und/oder an der Folienbahn (25) wird mittels Sensoren (80) und Druckmarken an dem Betätigungsetikett (70) überprüft,
b) an dem Betätigungsetikett (70) sind mindestens zwei im Abstand voneinander angeordnete Druckmarken (83, 84) angeordnet, vorzugsweise zwei Druckmarken (83) im Bereich einer Frontseite bzw. im Bereich einer Lasche (71), vorzugsweise an Enden einer Grifflasche (72) und mindestens eine weitere Druckmarke an einem rückseitigen Verbindungsschenkel (74), letztere vorzugsweise in der Ausführung als Streifenmarke (84).

13. Verfahren nach Anspruch 1 oder einem der weiteren Ansprüche, **gekennzeichnet durch** folgende Merkmale:
a) die vorzugsweise quer abstehenden, als Flossennaht ausgebildeten Verschlussnähte (18, 19) werden durch Abtrennen eines Randstreifens (56) hinsichtlich der Breite reduziert,
b) der abgetrennte Randstreifen (56) ist so bemessen, dass mindestens ein Teilbereich von durch den quergerichteten Faltprozess eingeführten Faltlappen (57), einschließlich einer durch den Hilfsschnitt (53) entstandenen Folienkante (54), durch den Randstreifen (56) erfasst wird,
c) nach dem Abtrennen des Randstreifens (56) wird die Flosse der Verschlussnaht (18, 19) gegen die Innen-Seitenwand (16) umgefaltet, vorzugsweise zur Rückseite der Packung (10).

14. Verfahren nach Anspruch 1 oder einem der weiteren Ansprüche, **dadurch gekennzeichnet, dass** die Zigarettengruppen bzw. die Einheiten (13) hinsichtlich der Relativstellung innerhalb des Folienschlauchs (26) fixiert sind, insbesondere durch mitlaufende, elastische Stützorgane, bevorzugt quergerichtete elastische Andrückstege (60), von denen vorzugsweise mehrere in Förderrichtung nebeneinanderliegen und einen fixierenden Druck gegen eine Schlauchoberwand (29) richten, wobei eine Mehrzahl von nebeneinander angeordneten Stützorgane an einem gemeinsamen Förderer (59) oberhalb der Bewegungsbahn des Folienschlauchs (26) angeordnet ist.

15. Verfahren nach einem der Ansprüche 10-14, **gekennzeichnet durch** folgende Merkmale:
a) das Betätigungsetikett (70) der Öffnungshilfe besteht aus einem einstückigen Zuschnitt mit einer Lasche (71) im Bereich einer Innen-Vorderwand (14) der Packung (10), mit einem Abdeckschenkel (88) im Bereich der Innen-Stirnwand (15) und mit einem Verbindungsschenkel (73) im Bereich einer Innen-Rückwand,
b) die Lasche (71) ist mit reduzierter Breite ausgebildet, insbesondere derart, dass die Lasche (71) in einer Ausnehmung (85) einer Kragen-Vorderwand (86) einer Außenpackung (21) Aufnahme findet, vorzugsweise mit zum freien Ende konvergierenden Laschenrändern (87),
c) der Abdeckschenkel (88) erstreckt sich etwa über die volle Fläche der Innen-Stirnwand (15), ggf. unter Anpassung an Konturen derselben,
d) der Verbindungsschenkel (73) ist mit geringerer Querabmessung bzw. Breite ausgebildet als der Abdeckschenkel (88).
e) ein Übergang (90) zwischen Lasche (71) und Abdeckschenkel (88) ist kontinuierlich ausgebildet, insbesondere gerundet.

## Claims

1. Method for producing packs (10) from preferably moisture-tight and aroma-tight sheet material for cigarettes, in the case of which a cigarette group (11) is enclosed, preferably as a unit (13) with an inner collar partially enclosing the cigarette group (11), by a sheet-material blank to give lateral closure seams in the form of a fin seam, wherein successively transported cigarette groups (11) or units (13) are wrapped continuously in a sheet-material web (25) to give a flexible sheet-material tube (26) and, in a sealing and severing station, transversely directed connecting seams are applied in the region of a folding portion (48) of the flexible sheet-material tube (26) and, between said connecting seams, severing cuts are applied in order to produce a respective pack (10), **characterized in that**, in the region of the folding portion (48), auxiliary cuts (53) are applied in, or to, the sheet-material web (25) in order to form an appropriate peripheral fold of the flexible sheet-material tube in the folding portion (48) such that, by virtue of regions of the flexible sheet-material tube (26) being folded in, folding flaps of the same are folded in in the region between folding flaps or fins of the transversely directed connected seams (18, 19) and, when the fin seams are produced, are connected thereto, that is to say are embedded between the fins.

2. Method according to Claim 1, **characterized in that** the region of the folding portion (48) has applied to it, preferably centrally between successive cigarette groups (11) or units (13), at least one sheet-material cut, in particular a transversely directed auxiliary cut (53), which extends in the region of a side wall (30) of the flexible sheet-material tube (26), wherein a folding mechanism for folding the sheet material in the region of the folding portion (48), in particular an insertion folder (49) with two spaced-apart folding crosspieces (51), is active on either side of the auxiliary cut (53) during the folding operation as a result of penetrating into the flexible sheet-material tube (26) in the region of the folding portion (48).

3. Method according to Claim 1 or 2, **characterized in that** folding lines in the lateral region of the folding portion (48), in particular in the flexible-tube side wall (30), are provided by preparatory measures, in particular in the region of the non-folded sheet-material web (25), with mechanical markings, in particular with stamped portions and/or severing cuts or partial cuts in the sheet material over a partial cross section of the same.

4. Method according to Claim 1 or one of the further claims, **characterized in that**, in accordance with the folding arrangement which is to be produced in the region of the folding portion (48), the sheet-material web (25) is provided with stamped or weakening lines, in particular with V-shaped lines corresponding to oblique lines (67) of the folding geometry and/or with lines which run in the longitudinal direction of the sheet-material web and correspond to parallel longitudinal folding lines (61, 62) and/or with lines in the region of longitudinally running central folding lines (66).

5. Method according to Claim 4, **characterized in that** the stamped or material-weakening lines corresponding to the folding lines and/or auxiliary cuts (53) and/or perforation lines (69) for defining opening flaps (68) of the inner pack (10), in the region of a joint cutting/punching station, to the sheet-material web (25), in particular to that side of the sheet-material web which corresponds to the inner side of the inner pack (10), preferably by way of a correspondingly arranged cutting roller (82) with abutment roller (95).

6. Method according to Claim 1 or one of the further claims, **characterised in that** the sheet-material web (25) is provided with venting openings (96) for the inner pack (10), said openings being produced by punching, in particular by U-shaped punched portions (97), wherein the U-shaped punched portions (97) are applied such that material tongues (98) formed by the punching operation are directed transversely to the longitudinal extent of the sheet-material web (25) .

7. Method according to Claim 6 or one of the further claims, **characterized in** the venting openings (96), in particular on account of U-shaped punched portions (97), are arranged on either side of an imaginary severing line of the sheet-material web (25) in order to form blanks for the inner pack (10), in particular such that in each case a number of punched portions (97) are arranged alongside the severing cut of the blanks, along an imaginary transverse line, in such a manner that, once a fin seam or side seam (18, 19) has been applied, the inner pack (10) has a row of venting openings (96) distributed over its height.

8. Method according to Claim 7 or one of the further claims, **characterized in that** the venting openings (96), in particular the U-shaped punched portions (97), preferably centrally along a cutting line for detaching a first sub-seam from the second sub-seam in the region of the same fin fold.

9. Method according to Claim 2, **characterized in that** mechanisms for producing the transversely directed connecting seams (18, 19), in particular sealing jaws (42, 43), and also blades (41) for applying the transversely directed severing cut of the flexible sheet-material tube (26), on the one hand, and the operation of the folding mechanisms (49), on the other hand, are coordinated with one another such that, as a result of the folding mechanism (49), inwardly folded folding flaps are accommodated between the fins of the transversely directed connecting seams (18, 19) to give approximately trapezoidal folding flaps (57) which are bounded by a material edge (54) formed by the auxiliary cut (53).

10. Method according to Claim 1 or one of the further claims, **characterized by** the following features:
a) the pack (10) made of sheet material has an opening aid with an actuating label (70), which comprises a separate blank and is intended for opening and closing a removal opening,
b) the actuating label (70) is applied in the correct position to the non-folded, planar sheet-material web (25) for producing the packs (10),
c) a weakening line, in particular a U-shaped perforation line (69) for bounding an opening flap (68), is applied in the region of the non-folded, planar sheet-material web (25), preferably once the actuating label (70) has been applied, by virtue of punching or perforating the sheet material on the side located opposite to the actuating label (70).

11. Method according to Claim 1 or one of the further claims, **characterized in that** punched portions and/or material weakenings in the sheet material for producing the pack (10) are produced in the region of the non-folded sheet-material web (25), preferably such that auxiliary cuts (53) and perforation lines (69) for the opening flap (68) are applied approximately at the same time, in particular by a joint cutting/punching mechanism (82), wherein preferably the punching mechanism (82) is arranged on that side of the sheet-material web (25) which is located opposite to the actuating label (70).

12. Method according to either of Claims 10 and 11, **characterized by** the following features:
a) the correct positioning of the actuating label (70) on the pack (10) and/or on the sheet-material web (25) is checked by means of sensors (80) and printed marks on the actuating label (70),
b) the actuating label (70) has arranged on it at least two spaced-apart printed marks (83, 84), preferably two printed marks (83) in the region of a front side or in the region of a flap (71), preferably at the ends of a grip tab (72), and at least one further printed mark on a rear-side connecting limb (74), said further printed mark preferably being in the form of a strip mark (84) .

13. Method according to Claim 1 or one of the further claims, **characterized by** the following features:
a) the preferably transversely projecting closure seams (18, 19), designed in the form of a fin seam, are reduced in width as a result of a peripheral strip (56) being detached,
b) the detached peripheral strip (56) is dimensioned such that it incorporates at least one sub-region of folding flaps (57) introduced by the transversely directed folding process, including a sheet-material edge (54) resulting from the auxiliary cut (53),
c) once the peripheral strip (56) has been detached, the fin of the closure seam (18, 19) is folded over against the inner side wall (16), preferably towards the rear side of the pack (10).

14. Method according to Claim 1 or one of the further claims, **characterized in that** the cigarette groups or the units (13) are fixed as far as their relative positioning within the flexible sheet-material tube (26) is concerned, fixing taking place in particular by carry-along elastic supporting mechanisms, preferably transversely directed elastic pressure-exerting crosspieces (60), of which preferably a plurality are located one beside the other in the conveying direction and direct a fixing-action pressure against a flexible-tube upper wall (29), wherein a plurality of supporting mechanisms arranged one beside the other are arranged on a common conveyor (59) above the movement path of the flexible sheet-material tube (26).

15. Method according to one of Claims 10-14, **characterized by** the following features:
a) the actuating label (70) of the opening aid comprises a single-piece blank having a flap (71) in the region of an inner front wall (14) of the pack (10), having a covering limb (88) in the region of the inner end wall (15) and having a connecting limb (73) in the region of an inner rear wall,
b) the flap (71) is designed with reduced width, in particular such that the flap (71) is accommodated in a recess (85) of a collar front wall (86) of an outer pack (21), preferably with flap peripheries (87) converging in the direction of the free end,
c) the covering limb (88) extends approximately over the entire surface area of the inner end wall (15), possibly with adaptation to contours of the same,
d) the connecting limb (73) is designed with a smaller transverse dimension or width than the covering limb (88),
e) a transition (90) between the flap (71) and covering limb (88) is continuous, in particular rounded.

## Revendications

1. Procédé de fabrication de paquets (10) de cigarettes à partir d'une feuille de préférence étanche à l'humidité et aux arômes, dans lequel un groupe de cigarettes (11) est entouré par une pièce découpée de feuille de préférence en tant qu'unité (13) présentant un rebord intérieur entourant partiellement le groupe de cigarettes (11) en formant des joints latéraux de fermeture réalisés en tant que joint à ailette, des groupes de cigarettes (11) ou des unités (13) transportés successivement étant enveloppés en continu par une bande de feuille (25) en formant une feuille tubulaire (26) et des joints de liaison orientés transversalement ainsi que des découpes de séparation entre ceux-ci étant ménagés dans une station de scellage et de séparation dans la région d'une partie pliée (48) de la feuille tubulaire (26) pour fabriquer respectivement un paquet (10), **caractérisé en ce que** des découpes auxiliaires (53) sont ménagées dans ou au niveau de la bande de feuille (25) dans la région de la partie pliée (48) pour former un pli ordonné du côté du bord de la feuille tubulaire dans la partie pliée (48), de telle sorte que, par pliage de régions de la feuille tubulaire (26), des languettes de pliage de celle-ci sont pliées dans la région entre des languettes de pliage ou des ailettes des joints de liaison (18, 19) orientés transversalement et sont, lors de la réalisation des joints à ailettes, reliées à ceux-ci, c'est-à-dire intégrées entre les ailettes.

2. Procédé selon la revendication 1, **caractérisé en ce qu'**au moins une découpe de feuille est ménagée dans la région de la partie pliée (48), de préférence centralement entre des groupes de cigarettes (11) ou des unités (13) successifs, en particulier une découpe auxiliaire (53) orientée transversalement s'étendant dans la région d'une paroi latérale (30) de la feuille tubulaire (26), un organe de pliage pour plier la feuille dans la région de la partie pliée (48), en particulier un dispositif de pliage piqueur (49) comprenant deux nervures de pliage (51) disposées à distance l'une de l'autre, agissant des deux côtés de la découpe auxiliaire (53) lors du pliage par pénétration dans la feuille tubulaire (26) dans la région de la partie pliée (48).

3. Procédé selon la revendication 1 ou 2, **caractérisé en ce que** des lignes de pliage dans la région latérale de la partie pliée (48), en particulier dans la paroi latérale de tube (30), sont dotées de marquages mécaniques par préparation en particulier dans la région de la bande de feuille (25) non pliée, en particulier sont dotées de gaufrages et/ou de découpes de séparation ou de découpes partielles de la feuille sur une section transversale partielle de celle-ci.

4. Procédé selon la revendication 1 ou l'une des autres revendications, **caractérisé en ce que** la bande de feuille (25) est dotée de lignes de gaufrage ou d'affaiblissement de manière correspondante au motif de pliage à réaliser dans la région de la partie pliée (48), en particulier de lignes en forme de V de manière correspondante à des lignes obliques (67) de la géométrie de pliage et/ou de lignes s'étendant dans la direction longitudinale de la bande de feuille de manière correspondante à des lignes de pliage longitudinales parallèles (61, 62) et/ou de lignes dans la région de lignes de pliage médianes (66) s'étendant dans la direction longitudinale.

5. Procédé selon la revendication 4, **caractérisé en ce que** les lignes de gaufrage ou d'affaiblissement de matériau de manière correspondante aux lignes de pliage et/ou à des découpes auxiliaires (53) et/ou à des lignes de perforation (69) pour la définition de languettes d'ouverture (68) du paquet intérieur (10) dans la région d'une station commune de coupe ou d'estampage sur la bande de feuille (25), en particulier sur le côté de la bande de feuille correspondant au côté intérieur du paquet intérieur (10), de préférence au moyen d'un cylindre de coupe (82) disposé de manière correspondante avec un contre-cylindre (95).

6. procédé selon la revendication 1 ou l'une des autres revendications, **caractérisé en ce que** la bande de feuille (25) est dotée d'ouvertures d'aération (96), produites par estampage, du paquet intérieur (10), en particulier de découpes estampées (97) en forme de U, les découpes estampées (97) en forme de U étant ménagées de telle sorte que des languettes de matériau (98) formées par estampage soient orientées transversalement à l'étendue longitudinale de la bande de feuille (25).

7. Procédé selon la revendication 6 ou l'une des autres revendications, **caractérisé en ce que** les ouvertures d'aération (96) sont, en particulier en raison de découpes estampées (97) en forme de U, disposées des deux côtés d'une ligne de séparation imaginaire de la bande de feuille (25) pour former des pièces découpées pour le paquet intérieur (10), en particulier de telle sorte que respectivement un certain nombre de découpes estampées (97) soient disposées près de la découpe de séparation des pièces découpées suivant une orientation le long d'une ligne transversale imaginaire, de telle sorte que le paquet intérieur (10) comprenne, après la réalisation d'un joint à ailette ou d'un joint latéral (18, 19), une rangée d'ouvertures d'aération (96) réparties sur la hauteur.

8. Procédé selon la revendication 7 ou l'une des autres revendications, **caractérisé en ce que** les ouvertures d'aération (96), en particulier les découpes estampées (97) en forme de U, de préférence centralement le long d'une ligne de coupe pour séparer un premier joint partiel du deuxième joint partiel dans la région du même pli à ailette.

9. Procédé selon la revendication 2, **caractérisé en ce que** des organes de réalisation des joints de liaison (18, 19) orientés transversalement, en particulier des mâchoires de scellage (42, 43), ainsi que des lames (41) pour ménager la découpe de séparation orientée transversalement de la feuille tubulaire (26) d'une part et le mode de fonctionnement des organes de pliage (49) d'autre part sont adaptés les uns aux autres de telle sorte que des languettes de pliage pliées vers l'intérieur au moyen de l'organe de pliage (49) soient logées entre les ailettes des joints de liaison (18, 19) orientés transversalement en formant des languettes de pliage (57) approximativement trapézoïdales qui sont limitées par une arête de matériau (54) formée par la découpe auxiliaire (53).

10. Procédé selon la revendication 1 ou l'une des autres revendications, **caractérisé par** les caractéristiques suivantes :
a) le paquet (10) constitué d'une feuille comprend un auxiliaire d'ouverture comprenant une étiquette d'actionnement (70) constituée d'une pièce découpée séparée pour ouvrir et fermer une ouverture de prélèvement,
b) l'étiquette d'actionnement (70) est appliquée en position correcte sur la bande de feuille plane (25) non pliée pour produire les paquets (10),
c) une ligne d'affaiblissement, en particulier une ligne de perforation (69) en forme de U pour limiter une languette d'ouverture (68) est ménagée dans la région de la bande de feuille plane (25) non pliée, de préférence après l'application de l'étiquette d'actionnement (70) par estampage ou perforation de la feuille sur le côté opposé à l'étiquette d'actionnement (70).

11. Procédé selon la revendication 1 ou l'une des autres revendications, **caractérisé en ce que** des découpes estampées et/ou des affaiblissements de matériau de la feuille sont produits dans la région de la bande de feuille (25) non pliée pour produire le paquet (10), de préférence de telle sorte que des découpes auxiliaires (53) et des lignes de perforation (69) pour la languette d'ouverture (68) soient ménagées approximativement simultanément, en particulier au moyen d'un organe de découpage ou d'estampage commun (82), l'organe d'estampage (82) étant disposé de préférence sur le côté de la bande de feuille (25) opposé à l'étiquette d'actionnement (70).

12. Procédé selon l'une des revendications 10 et 11, **caractérisé par** les caractéristiques suivantes :
a) le positionnement correct de l'étiquette d'actionnement (70) sur le paquet (10) et/ou sur la bande de feuille (25) est contrôlé au moyen de capteurs (80) et de marques d'impression sur l'étiquette d'actionnement (70),
b) au moins deux marques d'impression (83, 84) disposées à distance les unes des autres sont disposées sur l'étiquette d'actionnement (70), de préférence deux marques d'impression (83) dans la région d'un côté avant ou dans la région d'une languette (71), de préférence aux extrémités d'une languette de préhension (72) et au moins une autre marque d'impression sur une branche de liaison (74) située du côté arrière, cette dernière étant de préférence réalisée comme marque en bande (84).

13. Procédé selon la revendication 1 ou l'une des autres revendications, **caractérisé par** les caractéristiques suivantes ;
a) les joints de fermeture (18, 19) réalisés sous forme de joint à ailette et faisant saillie de préférence transversalement sont réduits en largeur par séparation d'un ruban de bord (56),
b) le ruban de bord séparé (56) est dimensionné de telle sorte qu'au moins une région partielle de languettes de pliage (57) introduites par le processus de pliage orienté transversalement, y compris une arête de feuille (54) créée par la découpe auxiliaire (53), soit saisie par le ruban de bord (56),
c) après la séparation du ruban de bord (56) l'ailette du joint de fermeture (18, 19) est repliée contre la paroi latérale intérieure (16), de préférence vers le côté arrière du paquet (10).

14. Procédé selon la revendication 1 ou l'une des autres revendications, **caractérisé en ce que** les groupes de cigarettes ou les unités (13) sont fixés en termes de position relative à l'intérieur de la feuille tubulaire (26), en particulier au moyen d'organes de support élastiques rotatifs, de préférence des nervures de pressage (60) élastiques orientées transversalement, parmi lesquelles de préférences plusieurs sont juxtaposées dans la direction de transport et orientent une pression de fixation vers une paroi supérieure de tube (29), une pluralité d'organes de support juxtaposés étant disposés sur un convoyeur commun (59) au-dessus de la trajectoire de déplacement de la feuille tubulaire (26).

15. Procédé selon l'une des revendications 10 à 14, **caractérisé par** les caractéristiques suivantes :
a) l'étiquette d'actionnement (70) de l'auxiliaire d'ouverture est constituée d'une pièce découpée d'un seul tenant dotée d'une languette (71) dans la région d'une paroi avant intérieure (14) du paquet (10), d'une branche de recouvrement (88) dans la région de la paroi latérale intérieure (15) et d'une branche de liaison (73) dans la région d'une paroi arrière intérieure,
b) la languette (71) présente une largeur réduite, en particulier de telle sorte que la languette (71) est logée dans un évidement (85) d'une paroi avant de rebord (86) d'un paquet extérieur (21), de préférence avec des bords languette (87) convergeant vers l'extrémité libre,
c) la branche de recouvrement (88) s'étend approximativement sur toute la surface de la paroi frontale intérieure (15), éventuellement en s'adaptant aux contours de celle-ci,
d) la branche de liaison (73) présente une dimension transversale ou une largeur inférieure à celles de la branche de recouvrement (88),
e) une transition (90) entre la languette (71) et la branche de recouvrement (88) est réalisée de manière continue, en particulier arrondie.
